# DEMANDE DE BREVET EUROPEEN

(11) **EP 1 552 891 A1**
(43) Date de publication de la demande: **13.07.2005**
(21) Numéro de dépôt: 05356002.5
(22) Date de dépôt: 05.01.2005
(51) Int. Cl.: B08B 9/02

(54) **Dispositif de nettoyage d'une poignée et chariot le comprenant**

(30) Priorité: 06.01.2004 FR 0400053; 09.07.2004 FR 0407703
(71) Demandeur: Portalier, René, 69660 Collonges au Mont d'Or (FR)
(72) Inventeur: Portalier, René, 69660 Collonges au Mont d'Or (FR)
(74) Mandataire: Myon, Gérard

(57) **Abrégé**

Ce dispositif de nettoyage comprend un coulisseau (2) qui est à même d'être monté à coulissement sur la poignée (1) et qui comprend au moins un organe annulaire (4) d'essuyage de cette poignée (1). Ce coulisseau (2) comporte de plus une bague (3) qui délimite un passage pour la poignée (1) et qui est pourvue de l'organe annulaire d'essuyage (4), destiné à entourer la poignée (1). Cette bague (3) est creuse et délimite partiellement une chambre (9) à même d'être fermée par la poignée (1) afin de pouvoir contenir un produit de nettoyage (10) en contact avec cette poignée (1).

On nettoie la poignée (1) en déplaçant le coulisseau (2) le long de cette poignée (1).

Application au nettoyage des poignées de chariot de supermarché.

## Description

La présente invention concerne un dispositif de nettoyage d'une poignée notamment d'un chariot, tel qu'un chariot de supermarché. Elle concerne également un chariot comprenant une poignée et un tel dispositif permettant de nettoyer cette poignée.

Les supermarchés mettent généralement à la disposition de leurs clients des chariots que ces clients peuvent utiliser pour transporter leurs courses dans la surface de vente et/ou jusqu'à leurs véhicules. La poignée de ces chariots n'est pas nettoyée entre deux clients successifs, ce qui n'est pas satisfaisant d'un point de vue hygiénique. Un client pourrait nettoyer la poignée d'un chariot avec son propre matériel avant de s'emparer de ce chariot. Pour ce faire, il devrait amener avec lui ce matériel de nettoyage, par exemple constitué d'un chiffon et d'un liquide désinfectant, ce qui serait fastidieux. De plus, le nettoyage de la poignée du chariot à l'aide d'un tel chiffon serait une opération également fastidieuse à réaliser. C'est pourquoi, dans la réalité, cela n'est fait par personne.

Dans GB-A-2 353 943 est décrit un dispositif de nettoyage qui facilite le nettoyage d'une poignée, notamment d'une poignée de chariot de supermarché. Ce dispositif de nettoyage est du type comprenant un coulisseau qui est à même d'être monté à coulissement sur la poignée et qui comprend un organe annulaire d'essuyage de cette poignée, ce coulisseau comportant de plus une bague qui délimite un passage pour la poignée et qui est pourvu de l'organe annulaire d'essuyage, destiné à entourer la poignée.

Dans certains cas, le dispositif du type précité ne peut pas correctement nettoyer la poignée. Tel est le cas notamment lorsque des matières grasses souillent cette poignée. En outre, le dispositif de nettoyage du type précité ne peut pas désinfecter la poignée, ce qui n'est pas satisfaisant d'un point de vue hygiénique.

L'invention a au moins pour but d'améliorer le nettoyage d'une poignée, notamment d'une poignée de chariot de supermarché.

A cet effet, l'invention a pour objet un dispositif de nettoyage du type précité, caractérisé en ce que ladite bague est creuse et délimite partiellement une chambre à même d'être fermée par la poignée afin de pouvoir contenir un produit de nettoyage en contact avec cette poignée, la bague et la poignée délimitant la chambre.

D'autres caractéristiques avantageuses de ce dispositif de nettoyage sont définies par les revendications 2 à 7 annexées.

L'invention a également pour objet un chariot, tel qu'un chariot de supermarché, comprenant une poignée, caractérisé en ce qu'il comprend un dispositif de nettoyage tel que défini ci-dessus, le coulisseau de ce dispositif de nettoyage étant monté à coulissement sur la poignée, la bague et la poignée délimitant la chambre.

Des caractéristiques avantageuses de ce chariot sont définies par les revendications 9 et 10 annexées.

L'invention sera bien comprise à la lecture de la description qui va suivre, donnée uniquement à titre d'exemple et faite en se référant aux dessins annexés, sur lesquels :
- la figure 1 est une vue en perspective d'un chariot conforme à l'invention ;
- la figure 2 est une vue en perspective d'une portion de la poignée du chariot de la figure 1 et d'un dispositif de nettoyage de cette poignée ;
- la figure 3 est une vue éclatée, en perspective, du dispositif de nettoyage de la figure 2 ;
- la figure 4 est une coupe selon le plan IV de la figure 2 ; et
- la figure 5 est une vue éclatée, en perspective, d'un dispositif de nettoyage selon une variante de réalisation de l'invention et d'une portion d'une poignée pouvant être nettoyée par ce dispositif.

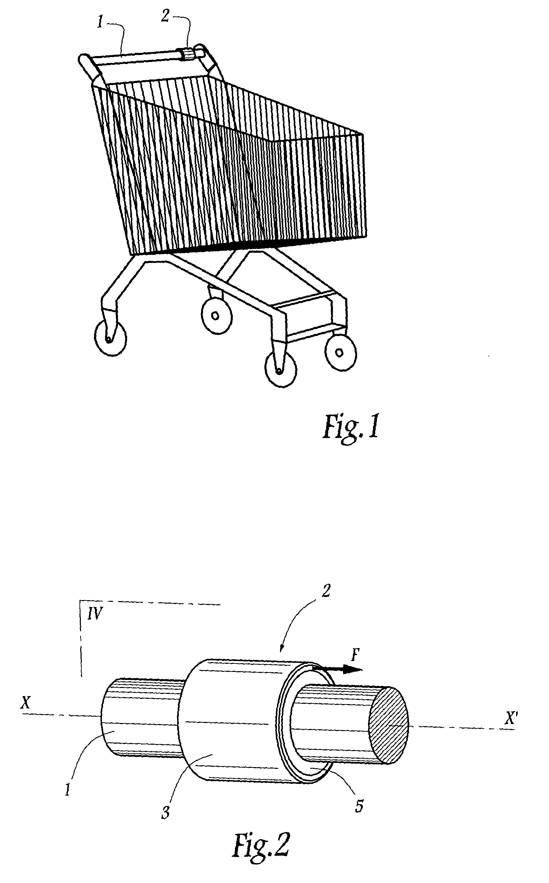

Sur la figure 1 est représenté un chariot de supermarché qui est destiné à être poussé et qui comporte à cet effet une poignée arrière et horizontale 1.

Sur la figure 2 est partiellement représentée cette poignée 1 sur laquelle est monté à coulissement un coulisseau 2 d'un dispositif de nettoyage. La poignée 1 est rectiligne et présente une surface externe sensiblement cylindrique à base circulaire, centrée sur un axe X-X' .

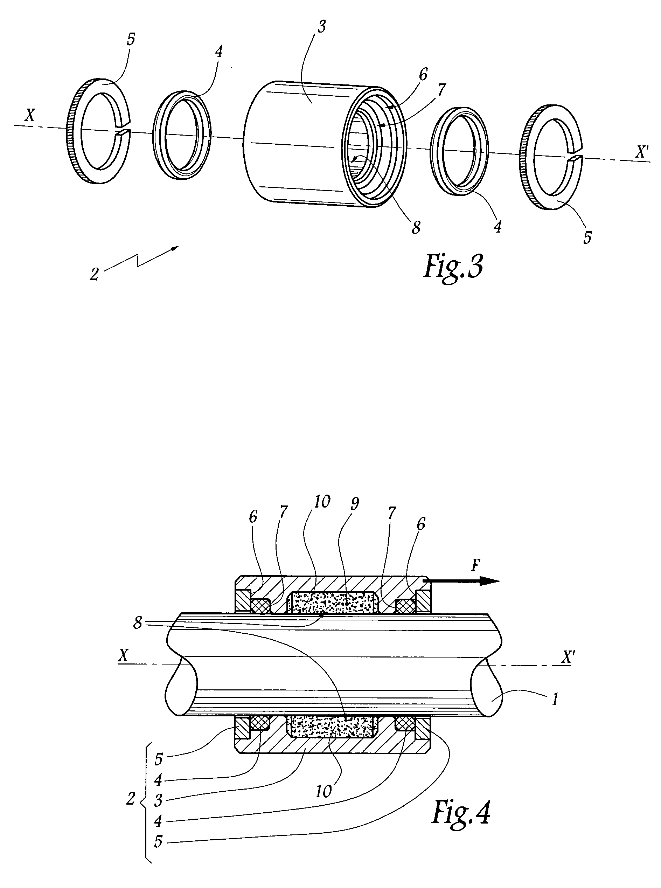

Le coulisseau 2 est symétrique par rapport à l'axe X-X' de la poignée 1. Il est représenté seul à la figure 3 et comporte une bague 3, deux joints d'étanchéité annulaires 4 en élastomère, ainsi que deux anneaux amovibles 5, dont chacun est destiné à retenir l'un des joints 4 dans la bague 3.

Chaque côté de la bague 3 définit deux épaulements annulaires et internes 6 et 7, qui sont tournés vers l'extérieur et se succèdent. Chaque anneau 5 est fendu et emboîté à force dans la bague 3, contre l'un des épaulements 6. Comme on peut le voir à la figure 4, la bague 3 et chaque anneau 5 délimitent conjointement une gorge interne et annulaire dont un côté est formé par un des épaulements 7 et dans laquelle est monté l'un des joints d'étanchéité 4.

La bague 3 délimite un passage P pour la poignée 1 et une gorge annulaire et interne 8 qui entoure ce passage P. Une fois que la bague 3 a été enfilée sur la poignée 1, cette gorge 8 est fermée par la poignée 1 et forme une chambre 9 qui contient un produit de nettoyage 10 qui peut être liquide, pâteux ou solide.

Chaque joint 4 réalise une étanchéité entre la bague 3 et la poignée 1, au niveau d'un des côtés de la chambre 9, et empêche le produit de nettoyage 10 de s'échapper de cette chambre 9 au moins lorsque le coulisseau 2 est fixe sur la poignée 1. Le produit de nettoyage 10 est en contact avec la poignée 1, puisque la chambre 9 qui le contient est partiellement délimitée par cette poignée 1.

Pour nettoyer la poignée 1, on fait coulisser le coulisseau 2 le long de cette poignée 1, ce que symbolise la flèche F aux figures 2 et 4. Les joints 4 ont alors pour fonction d'essuyer la poignée 1, dont le nettoyage est amélioré par le produit de nettoyage 10, conformément au but de l'invention. Avantageusement, ce dernier contient un agent désinfectant.

Il ressort de ce qui précède que le nettoyage d'une poignée 1 à l'aide du coulisseau 2 est facile à réaliser, ce qui est avantageux. En particulier, ce nettoyage ne nécessite pas d'avoir au préalable apporté son propre matériel de nettoyage, puisque le coulisseau 2 équipe la poignée 1 en permanence.

On notera que chaque joint 4 remplit deux fonctions, ce qui est avantageux. Premièrement, chaque joint 4 réalise une étanchéité, de sorte que la chambre 9 est sensiblement hermétique au moins lorsque le coulisseau 2 est immobile. Deuxièmement, les joint 4 essuient la poignée 1 lorsque le coulisseau 2 est déplacé.

Pour recharger la chambre 9 en produit de nettoyage liquide 10, on place sensiblement verticalement la poignée 1, puis on retire l'anneau 5 et le joint d'étanchéité 4 qui se trouvent sur le dessus de la bague 3. Ensuite, on verse du produit de nettoyage entre le bord supérieur de la bague 3 et la poignée 1. Le produit de nettoyage ainsi versé s'écoule par gravité dans la chambre 9. Une fois cette dernière remplie, on replace le joint 4 et l'anneau 5 ôtés précédemment.

Si le produit de nettoyage est formé de lamelles, le remplissage de la chambre 9 peut avoir lieu alors que la poignée est conservée horizontale.

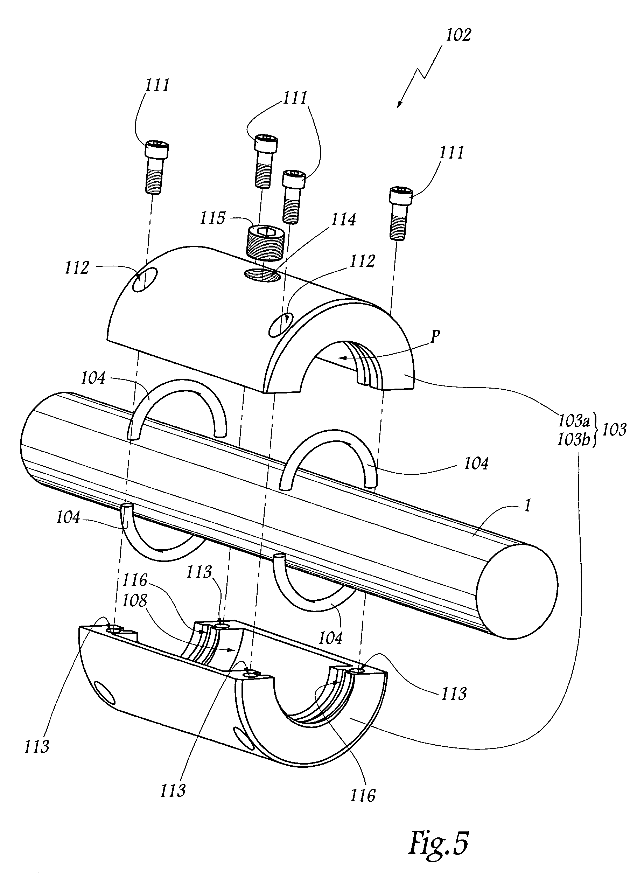

Un dispositif de nettoyage selon une variante de réalisation de l'invention est représenté à la figure 5 et comporte un coulisseau 102, dont une bague 103 résulte de l'assemblage de deux demi-bagues 103a et 103b. Des vis 111, au nombre de quatre dans l'exemple représenté, maintiennent assemblées, par serrage, ces deux demi-bagues 103a et 103b. Pour ce faire, chacune d'elles passe dans un trou traversant 112 ménagé dans la demi-bague 103a et est vissée dans un trou taraudé 113 prévu dans la demi-bague 103b.

Un passage P pour une poignée 1 d'un chariot semblable à celui représenté à la figure 1 traverse de part en part la bague 103. Il n'est entouré que partiellement par les deux demi-bagues 103a et 103b. En d'autres termes, chaque demi-bague 103a ou 103b n'est disposée que d'un côté de ce passage P.

Comme la gorge 8, une gorge annulaire et interne 108, qui entoure le passage P et que délimite la bague 103, est destinée à être fermée par la poignée 1 et à former une chambre semblable à la chambre 9 et contenant un produit de nettoyage non représenté.

Un trou traversant et taraudé 114 est ménagé dans la demi-bague 103a et débouche dans la gorge 108. Il est obturé hermétiquement par un bouchon vissé 115 et permet de recharger le dispositif de nettoyage de la figure 5 en produit de nettoyage, après qu'à été retiré ce bouchon 115.

A chacune de ses deux extrémités, la bague 103 délimite une rainure intérieure 116 destinée à retenir deux demi-joints d'étanchéité et d'essuyage 104, qui sont prévus pour remplir la même fonction que chaque joint 4. Les extrémités des deux demi-joints 104 engagés dans une rainure 116 peuvent avantageusement être unies les unes aux autres par collage, soudage ou de toute autre manière appropriée, de manière qu'un joint annulaire soit formé.

Lorsqu'on le fait coulisser le long de la poignée 1, le coulisseau 102 nettoie cette poignée 1 de la même manière que le fait le coulisseau 2.

Comme elle est constituée des deux demi-bagues 103a et 103b, la bague 103 peut être installée sur la poignée 1 autrement qu'en étant enfilée sur cette poignée 1. De même, elle peut être démontée de la poignée 1 autrement que par une extrémité de celle-ci. Cela peut être avantageux, notamment dans le cas où les deux extrémités de la poignée 1 sont fixées d'une manière telle qu'il est très difficile, voire impossible, de dissocier cette poignée 1 de l'objet qu'elle équipe.

Le produit de nettoyage 10 utilisé peut être un savon liquide ou se présentant sous la forme d'un gel. Il peut également s'agir d'un savon solide moulé à la forme de la gorge 8 ou 108 ou découpé en lamelles disposées dans la gorge 8 ou 108. Qu'il soit liquide, solide ou pâteux, le savon dans la chambre 9 est avantageusement à base d'alcool.

## Revendications

1. Dispositif de nettoyage d'une poignée (1), notamment d'une poignée de chariot de supermarché, ce dispositif de nettoyage comprenant un coulisseau (2 ; 102) qui est à même d'être monté à coulissement sur la poignée (1) et qui comprend au moins un organe annulaire (4) d'essuyage de cette poignée (1), ce coulisseau (2) comportant une bague (3 ; 103) qui délimite un passage (P) pour la poignée (1) et qui est pourvue de l'organe annulaire d'essuyage (4 ; 104) destiné à entourer la poignée (1), **caractérisé en ce que** ladite bague (3 ; 103) est creuse et délimite partiellement une chambre (9) à même d'être fermée par la poignée (1) afin de pouvoir contenir un produit de nettoyage (10) en contact avec cette poignée (1) .

2. Dispositif selon la revendication 1, **caractérisé en ce que** l'organe annulaire d'essuyage (4 ; 104) est réalisé en élastomère.

3. Dispositif selon la revendication 2, **caractérisé en ce que** l'organe d'essuyage est un joint annulaire d'étanchéité (4 ; 104).

4. Dispositif selon la revendication 3, **caractérisé en ce que** ledit joint d'étanchéité (4 ; 104) est à même de réaliser une première étanchéité entre la bague (3 ; 103) et la poignée (1), au niveau d'un premier côté de la chambre (9), la bague étant pourvue d'un deuxième joint annulaire d'étanchéité (4 ; 104) à même de réaliser une deuxième étanchéité entre la bague (3 ; 103) et la poignée (1), au niveau d'un deuxième côté de la chambre (9).

5. Dispositif selon l'une quelconque des revendications précédentes, **caractérisé en ce que** la bague (3 ; 103) délimite une gorge annulaire et interne (8 ; 108) qui est à même d'être fermée par la poignée (1) afin de former ladite chambre (9).

6. Dispositif selon l'une quelconque des revendications précédentes, **caractérisé en ce que** la bague (3) est pourvue d'au moins un anneau amovible (5) de retenue de l'organe annulaire d'essuyage (4).

7. Dispositif selon l'une quelconque des revendications précédentes, **caractérisé en ce que** la bague (103) comporte deux demi-bagues (103a, 103b) et des moyens (111) d'assemblage de ces demi-bagues (103a, 103b) dont chacune n'entoure qu'en partie ledit passage (P).

8. Chariot, notamment chariot de supermarché, comprenant une poignée (1), **caractérisé en ce qu'**il comprend un dispositif de nettoyage selon l'une quelconque des revendications précédentes, le coulisseau (2 ; 102) de ce dispositif de nettoyage étant monté à coulissement sur la poignée (1), ladite bague (3 ; 103) et ladite poignée (1) délimitant ladite chambre (9).

9. Chariot selon la revendication 8, **caractérisé en ce que** ladite chambre (9) contient un produit de nettoyage (10).

10. Chariot selon la revendication 9, **caractérisé en ce que** ledit produit de nettoyage contient un agent désinfectant.
